(19)

Europäisches Patentamt
European Patent Office
Office européen des brevets

(11) **EP 4 434 790 A1**

(12) **EUROPEAN PATENT APPLICATION**

(43) Date of publication:
**25.09.2024 Bulletin 2024/39**

(21) Application number: **23164180.4**

(22) Date of filing: **24.03.2023**

(51) International Patent Classification (IPC):
**B60K 6/46** *(2007.10)*  **B60K 6/48** *(2007.10)*
**B60K 6/52** *(2007.10)*  **B60W 20/15** *(2016.01)*
**B60W 30/20** *(2006.01)*  **B60W 10/06** *(2006.01)*
**B60W 10/08** *(2006.01)*  B60W 50/00 *(2006.01)*

(52) Cooperative Patent Classification (CPC):
**B60K 6/48; B60K 6/46; B60K 6/52; B60W 10/06;
B60W 10/08; B60W 20/15; B60W 30/20;**
B60W 2030/206; B60W 2050/0006;
B60W 2710/0644; B60W 2710/0661;
B60W 2710/0666

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Zilinská Univerzita V Ziline**
**010 26 Zilina (SK)**

(72) Inventors:
• **Kascak, Slavomir**
**053 042 Krompachy (SK)**

• **Makys, Pavol**
**013 04 Dolna Tizina (SK)**
• **Prazenica, Michal**
**018 26 Plevnik (SK)**
• **Frivaldsky, Michal**
**013 42 Horny Hricov (SK)**

(74) Representative: **Wörz, Volker Alfred**
**Wörz Patentanwälte PartG mbB**
**Gablenberger Hauptstraße 32**
**70186 Stuttgart (DE)**

(54) **ELECTRIC MOTOR CONTROL DEVICE IN THE FUNCTION OF A FLYWHEEL OF THE COMBUSTION ENGINE AND METHOD OF CONTROL**

(57)    Device for controlling an electric motor in the function of a flywheel of an internal combustion engine comprises interconnected parts: a power part (A), a control circuit (8) and a control module (B), wherein:
the power part (A) consists of a sensor block (2), which is elastically connected by means of a shaft (X1) to the electric motor (3) in the function of the flywheel of the combustion engine (1) and is also connected to the external combustion engine (1) by means of the shaft (X1), it further includes a measuring circuit (4) which is bi-directionally connected to the traction converter (5) by means of power wires (X2), which is bi-directionally connected to the energy storage (6) by means of power wires (X2), wherein the electric motor (3) is bi-directionally connected by means of the power wires (X2) to the measuring circuit (4) for the energy flow in the circuit, wherein the traction converter (5) is a traction inverter adapted for bi-directional energy flow; the energy storage (6) is composed of several components connected in parallel and comprises an electrochemical cell - a battery and a capacitor;

the control circuit (8) consists of a controller (9) which is connected to a torque calculation block (11) by signal wires (X3), and the torque calculation block is connected to a current controller (12) by signal wires (X3) connected to the PWM modulator block (13) by means of the signal wires (X3), wherein the PWM modulator block (13) is connected to the traction converter (5) by means of the signal wires (X3) in a unidirectional way , and the current regulator (12) is connected to the measuring circuit (4) in a unidirectional way by means of the signal wires (X3); and the control module (B) consists of a master control system (7) which is unidirectionally connected via signal wires (X3) to the desired values block (10), and the master control system (7) is also unidirectionally connected via signal wires (X3) to the external combustion engine (1);
whereby the sensor block (2) is unidirectionally connected to the controller (9) by means of signal wires (X3), and the desired values block (10) is connected to the control circuit (8) by means of signal wires (X3).
A method of control of the device is also described.

EP 4 434 790 A1

Fig. 4

## Description

### Field of Technology

A device for control of an electric engine in the function of a flywheel of the combustion engine and the control method according to the presented design belong to the field of mechanics, specifically to the field of combustion engines, electrical engineering, power electronics and control.

### State of the Art

Several control systems for electric motors in electric vehicles and hybrid vehicles are known from the state of the art.

For example, the patent US2015349679A1 entitled HYBRID-VEHICLE VARIABLE-VOLTAGE TRACTION MOTOR DRIVE addresses drive of a hybrid vehicle. The electric motor used therein generates motive power together with the combustion engine to move the vehicle by storing energy from the vehicle's motion in the event of braking. This electric motor does not act as a torque ripple compensator for the given combustion engine.

An electric motor in an electric vehicle is, in principle, a conventional electric motor adapted to more demanding requirements in terms of durability, service life, frequent start-ups, overloads, temperatures, and so on. Such a motor operates for long periods of time in either motor or generator mode. In motor mode, the energy from the source is directed to the traction electric motors and during braking - recovery, the electric motors operate as generators, with the energy directed back to the source. These processes are long term - working in one mode takes several seconds or more.

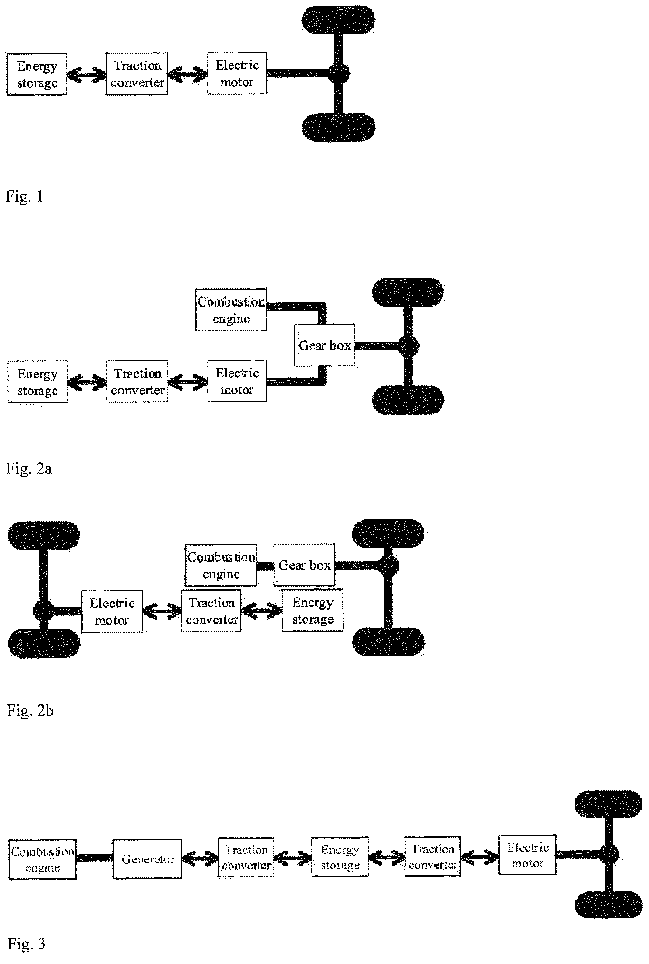

Composition of the driving unit of a pure electric vehicle is shown in Figure 1, and it consists of: an energy source (battery, supercapacitor/ ultracapacitor, fuel cell) which powers a traction converter which supplies electricity in the required form to the traction electric motors.

The term "traction" refers to equipment adapted for transport purposes (e.g. trains, trams, trolleybuses, electric vehicles, etc.). Traction equipment is generally of a more robust construction to provide greater durability, and also has various modifications to ensure operation in a wide range of outdoor working conditions.

It is possible to use only one traction electric motor or several ones depending on a type, power and layout.

A hybrid drive provides various combinations of combustion engine and electric motor operation to achieve better vehicle performance characteristics such as durability, trailing throttle, emissions, power, etc. In certain modes of operation, the combustion engine and the electric motor can also operate independently, with limited characteristics. For example, pure electric drive when running low on fuel, or operation with the combustion engine only when the batteries are low. Hybrid vehicles use both the combustion engine and the electric motor for operation. There is a number of possible arrangements for this drive.

The Figure 2 shows composition of the driving unit of a hybrid vehicle in a parallel system, where the combustion engine works together with the electric motor into a common load, i.e., they share the power in a certain ratio. In the parallel system, the power of the two engines is added together and transferred to the drive axle of the vehicle.

In case of the series system in Figure 3, the combustion engine drives an electric generator which generates electricity and then feeds it to a traction electric motor that drives the drive axle. The combustion engine power may be different from that of the traction electric motor. The power of the combustion engine then determines how fast the vehicle battery will charge/discharge.

Nowadays, a mechanical flywheel is used as a part of combustion engines, i.e. a body that acts as a kinetic energy accumulator.

The mechanical flywheel stores the energy during the explosion - expansion and in turn transfers it during the intake, compression and exhaust, thus ensuring the even running of the combustion engine. The mechanical flywheel is a rotating body and is directly coupled to the combustion engine. Size of the mechanical flywheel, its dimensions and its weight determine the amount of energy stored in it. In this case smoother running of the engine is achieved either by higher number of cylinders or by larger flywheel. However, a larger flywheel brings limitations in the form of higher weight and larger dimensions of the device, but also in the form of impaired dynamics of the connected combustion engine due to a slower response to the desired speed change.

Vibration damping devices are also known in the prior art, for example EP0746703 AI entitled "PROCESS AND DEVICE FOR ACTIVE VIBRATION DAMPING". The aim of the invention is to provide a further method for active vibration damping, as well as an accessible system for its performance, which are less expensive and are particularly suitable for motor vehicles. The invention describes a device and method for active vibration damping in power units with at least one rotating shaft, in particular a crankshaft for motor vehicles, in which the speed irregularities of the rotating shaft are consequently kept below a predetermined value, whereby the shaft seat at the end of the base element of the electrical machine is used as a movable flywheel. The patent addresses conditions of uneven rotation of the combustion engine, for example, when one cylinder is omitted from operation, uneven combustion, etc., which leads to generation of disturbing oscillations. This design does not directly compensate for the oscillations of the combustion engine caused by the action of the cylinders. Instead of a rotating magnetic field - as in case of rotary engines - this design uses a purely moving field that passes through the rotor or stator and generates eddy currents. These currents create magnetic fields that damp the oscillating motions that caused them. Oscillations damping is controlled in mechanical way, by rotating and pivoting the shaft.

The mechanical flywheel in motor vehicles can also be replaced by an electric flywheel, which consists of an electric motor. With this flywheel, it is possible to achieve improvements in parameters of the internal combustion engine, such as reducing the weight of the internal combustion engine and its dimensions, improving the dynamic properties, reducing the stresses. During expansion the electric motor works as a generator and stores energy in the batteries, and vice versa, during other cycles it takes energy from the batteries and drives the internal combustion engine.

Use of the electric motor as a substitute for a mechanical flywheel is described, for example, in the technical solution entitled "Flywheel in a Combustion Piston Engine" which is the subject of the utility model UV 8512 (PÚV 151-2018) of 2019. However, its practical use is limited by its suitable control in order to maintain the correct operation of the internal combustion engine. The control method is not described in this technical solution.

**Essence of the Invention**

The above-mentioned problem of inadequate control of an electric motor used as a replacement for a mechanical flywheel in combustion engine vehicles is eliminated by the device for controlling the electric flywheel of the combustion engine, and the control method according to the presented design solution.

In its function of the combustion engine electric flywheel according to the presented design, the electric motor is adapted for a specific purpose of damping the vibration of the vehicle, and not for driving the vehicle.

The electric motor, in its function as a flywheel, dampens the vibrations caused by action of the combustion engine cylinders to compensate for the fluctuations in the internal combustion engine torques. Its important characteristic is that it is adapted to rapid changes in the operating modes of the combustion engine, and must respond quickly to steering requirements. At the same time, it must be able to tolerate high and step changes in torque, have high power output and also high overload capability. Operation of this engine (power/torque) is not directly related to drive of the vehicle, but to operation of the combustion engine that drives the vehicle.

In a "classic" electric vehicle, or hybrid vehicle, drive of the vehicle is composed as a combination of combustion engine and electric motor drive in various configurations. The mode of operation of the electric motor is always long term, which means that the electric motor operates in one mode of operation for a long time - in the motor mode (for seconds, minutes, hours) when the vehicle travels a long distance, or in the generator mode when the vehicle brakes (seconds).

A device for controlling the electric motor in the function of a flywheel of an combustion engine according to the present solution comprises interconnected parts: a power part, a control circuit and a control module, wherein:
The power section contains a sensor block which is flexibly connected to the electric motor by a shaft and is also connected to the external combustion engine by a shaft. The measuring circuit is connected bidirectionally to the traction converter by means of power wires, which is connected bidirectionally to the energy storage by means of power wires. The electric motor is bi-directionally connected to the measuring circuit by means of power wires to measure the energy flow in the circuit.

The control circuit includes a controller which is connected via signal wires to a torque calculation block which is connected via signal wires to the current controller which is connected via signal wires to the PWM modulator block which is in one direction connected via signal wires to the traction converter. The current controller is connected to the measuring circuit in a unidirectional way via signal wires.

The control module includes a master control system that is unidirectionally connected to the desired values block via signal wires, and the master control system is unidirectionally connected to the external combustion engine via signal wires.

The sensor block is unidirectionally connected to the controller by signal wires, and the desired values block is connected to the control circuit by signal wires.

The desired values block can be connected to the control circuit by means of signal wires so that:

- it is connected in one way to the controller or
- is unidirectionally connected to the torque calculation block.

The first part of the system consists of a power part connected to the combustion engine. The power part comprises a speed sensor connected to the electric motor. Based on the control data, the energy from the energy storage is converted by the traction converter in the electric motor into the desired power, and conversely, the generated power is converted by the electric motor and the traction converter into energy which is stored in the energy storage. Measuring circuits measure the energy flows for the control circuit.

The second part of the system consists of a control circuit which generates the desired engagement torque acting against the combustion engine torque from the combustion engine speed and the desired speed, and from which the currents corresponding to this condition are subsequently determined and also compared with the actual value of the currents in the electric motor. From the result of this process we obtain the reference signals for the PWM modulator, i.e. the control signals for the electric motor, which operates as a substitute for the mechanical flywheel.

The last part is the master control module, which generates the corresponding signals for the combustion engine based on the user's requirements and also the speed reference, or acceleration reference, of the torque for the electric motor control circuit.

In this case the traction converter is a device that ensures the modification (suitable conversion) of energy from the energy storage to the electric motor and back, so it is an inverter that allows bidirectional energy flow. Specifically, it is a so-called traction inverter which, in the motor mode, produces the required AC voltage for the electric motor from the DC voltage from the energy storage and, conversely, in the generator mode, rectifies the AC voltage generated by the electric motor (in this mode, the generator) into DC voltage for charging the energy storage. Due to the periodic and very fast operation, the energy storage is composed of several elements connected in parallel. For slow events and high powers, there is an electrochemical cell in the storage - a battery, which supplies constant power. For fast events - for operation of the electric flywheel and for supply/storage of short but fast events, a capacitor (supercapacitor/ultracapacitor) is used.

The device for controlling the electric flywheel of the combustion engine operates in such a way that it continuously changes storing and releasing electric flywheel energy at very short intervals, which are in milliseconds. The electric motor in the flywheel function operates periodically in the motor and generator mode at a high frequency, from 10s to 100s of Hz, in very short time intervals in milliseconds, regardless of which operating mode the vehicle is in. Even when the vehicle is stationary, but the combustion engine is started, the electric motor stores/supplies energy from/to the combustion engine.

The frequency of alternation between motor and generator mode depends on the specific design of the combustion engine, and is determined by the engine type, number of cylinders, power, and engine speed.

The control of the electric motor in the function of the combustion engine flywheel is provided by a master control system, which compares the actual combustion engine values measured by the sensor with the desired values that are pre-set by the operator.

According to the presented design, the device may operate based on different data of power of the combustion engine. The sensor can thus record:

- speed data

- acceleration data

- torque data.

Using a speed sensor is the most cost effective compared to using an acceleration sensor or torque sensor, but a speed sensor, acceleration sensor and torque sensor can all be used. Using a torque sensor is the most expensive solution from the economic perspective.

The acceleration is given as the derivative of the speed of the internal combustion engine.

In case of sensing speed data:
From the rotational acceleration (angular velocity) of the combustion engine (angular acceleration irregularity) and the desired acceleration (under standard conditions, the desired acceleration is close to zero), the control circuit generates a desired engagement torque which acts against the combustion engine torque, from which the currents corresponding to this condition are then determined, and at the same time these currents are compared with the actual value of the currents in the electric motor. From the result of this process we obtain the reference signals for the PWM modulator, i.e. the control signals for the electric motor, which operates as a substitute for the mechanical flywheel. The desired torque value can be either zero, when the connection compensates only for the ripple of the generated combustion engine torque, or the torque value can be user-specified in order to increase the combustion engine torque - in this case, the connection also compensates for the torque ripple of the combustion engine, but in addition generates additional torque to drive the vehicle.

Based on user requirements, the master control system generates the corresponding signals for the combustion engine as well as an acceleration reference for the electric flywheel control circuit.

In case of moment data reading:
The control circuit extracts from the torque generated by the combustion engine only its ripple, i.e. only the AC component, which is then inverted. Based on the desired torque value and the actual generated torque, i.e. the inverted value of its ripple, the currents corresponding to this condition are determined and also compared with the actual value of the currents in the electric motor. From the result of this process, we obtain the reference signals for the PWM modulator, i.e. the control signals for the electric motor, which operates as a substitute for the mechanical flywheel. The desired torque value can either be zero, where the circuitry compensates only for the ripple of the generated combustion engine torque, or user-specified in order to increase the combustion engine torque, where the circuitry also compensates for the ripple of the combustion engine torque, but in addition generates additional torque to drive the vehicle.

Based on user requirements, the master control system generates the corresponding signals for the combustion engine as well as a torque reference for the electronic flywheel control circuit.

The advantage of a device for controlling the electric flywheel of the combustion engine is that the wiring not only replaces the function of the mechanical flywheel, but also, when properly sized, allows the power of the combustion engine, and thus of the vehicle as a whole, to be increased by the fact that the electric motor will also generate the power necessary to achieve the desired speed of the vehicle.

In specific cases, the electric motor in the function of the flywheel can also compensate for the movement of the whole vehicle, but this must be taken into account in the design and the electric motor, traction converter and energy storage must be sufficiently dimensioned for this purpose.

**Short description of figures**

Fig. 1 Schematic diagram of the powertrain of a pure electric vehicle

Fig. 2a, 2b Schematic diagrams of the possible wiring of the hybrid vehicle's powertrain system

Fig. 3 Schematic diagram of the hybrid vehicle's serial powertrain system

Fig. 4 General equipment block diagram

Fig. 5a Block diagram of the device if the combustion engine speed is measured

Fig. 5b Block diagram of a torque control device using a torque transducer

Fig. 6 Block diagram of the device for acceleration-based control using accelerometer

**Examples**

**Example 1**

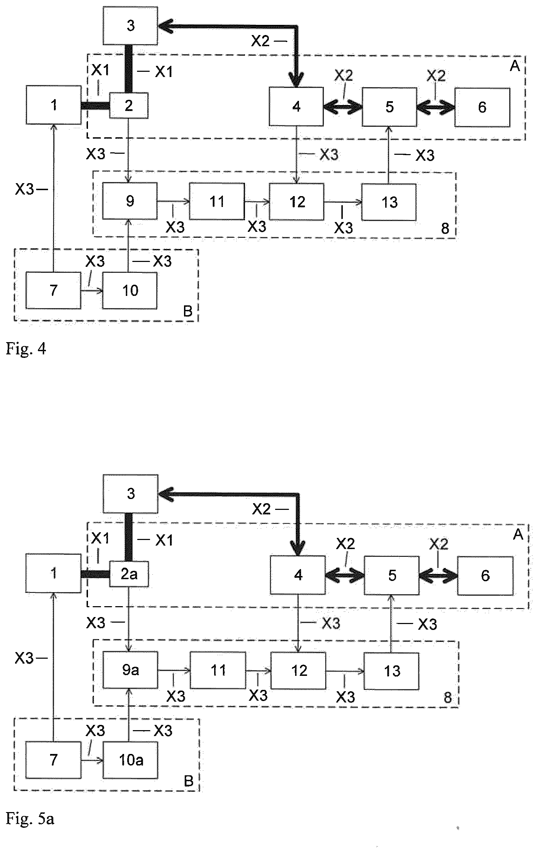

According to the Fig. 4, the device is a schematic of the device for controlling the electric motor in a basic embodiment. It consists of interconnected parts: a power part A, a control circuit 8 and a control module B.

The power part A contains a sensor block 2 which is resiliently connected to the electric motor 3 by means of a shaft X1 and is also connected to the external combustion engine 1 by means of the shaft X1; it further consists of a measuring circuit 4 which is bidirectionally connected to the traction converter 5 by the power wires X2, which is connected bidirectionally to the energy storage device 6 also by the power wires X2. The electric motor 3 is bi-directionally connected to the measuring circuit 4 by the power wires X2 for measuring the energy flow in the circuit. The traction converter 5 is a traction inverter adapted for bidirectional power flow. The energy storage 6 is composed of several elements connected in parallel and includes an electrochemical cell - a battery and a capacitor.

The control circuit 8 consists of a controller 9 which is connected to the torque calculation block 11 by the signal wires X3, which is connected to the current controller 12 by the signal wires X3, and it is connected to the PWM modulator block 13 by the signal wires X3. The PWM block 13 is connected to the traction converter 5 by the signal wires X3 in the unidirectional manner. The measuring circuit 4 is connected to the current controller 12 by the signal wires X3 in one way.

The control module B consists of a master control system which is unidirectionally connected via signal wires X3 to the desired values block 10, and the master control system 7 is also unidirectionally connected via signal wires X3 to the external combustion engine 1.

The sensor block 2 is unidirectionally connected to the controller 9 by the signal wires X3, and the desired values block 10 is connected to the control circuit 8 by the signal wires X3.

In case of the device in Fig.4, the desired values block 10 is connected to the control circuit 8 so that it is connected to the controller 9 by the signal wires X3 in a unidirectional way.

The electric motor 3 in the function of the flywheel of the combustion engine 1 is adapted to damp the vibrations of the combustion engine 1 and to periodically alternate the operating modes, the motor and generator modes, in very short time intervals, namely in milliseconds with a high frequency from 10s to 100s Hz.

The working method of the device for controlling the electric flywheel of the combustion engine includes the following steps:

- first, the desired values of power of the combustion engine 1 are set in the master control system 7 by the user, and these are transferred to the desired values block 10,

- the combustion engine 1 is resiliently connected to the sensor block 2 and the electric motor 3, and the sensor block 2 collects the power readings of the connected combustion engine 1 and ensures transmission of these readings between the combustion engine 1 and the electric motor 3,

- the sensor block 2 transmits, via signal wires X3, information about the measured power values of the combustion engine 1 to controller 9, where they are compared with the desired value from the desired values block 10. In the torque calculation block 11 this result is then converted into the current which is fed to the current controller 12, where the current corresponding to the given torque and the actual currents measured in the measuring circuit 4 are used to form a voltage reference for the PWM modulator block 13,

- control signals from the PWM modulator block 13 subsequently control the traction converter 5 and thus the power flow in the circuit,

- the flow of electrical energy is directed from the energy storage 6 to the electric flywheel 3 either in the motor mode or it is directed in the opposite direction in the recovery mode, while the traction converter 5 in the motor mode produces the required AC voltage for the electric motor 3 from the DC voltage from the energy storage 6, and the other way round, it means that in the recovery mode it directs the AC voltage generated by the electric motor 3 to DC voltage for charging the energy storage 6.

The electric motor 3 operates periodically in the motor and generator mode at a high frequency of 10s to 100s Hz, regardless of the operating mode of the vehicle with the combustion engine 1.

The master control system 7 controls the combustion engine 1 through the signal wires X3, and at the same time transmits the desired value information to the desired values block 10 by the signal wires X3; on the basis of the desired values input to the device through the master control system 7 and evaluation of the data in the desired speed block 10, the torque ripple of the combustion engine 1 is compensated by the device.

The energy storage 6 supplies constant power for slow events and high power through the battery, and a capacitor, supercapacitor / ultracapacitor is used for supply/storage of short but fast events, as well as for operation of the electric motor 3.

**Example 2**

The devices on the Fig. 5a is a schematic of the device, when the speed of the combustion engine 1 is measured.

This device differs from the device presented in the Example 1 by the fact that the desired values are the speed of the combustion engine 1, the desired values block is the desired speed block 10a, the sensor block is the speed sensor 2a, and the controller is the desired speed controller 9a.

The way the device works is the same as in Example 1.

In this case the wiring only replaces function of the mechanical flywheel, i.e. the wiring only compensates for the torque ripple of the combustion engine 1, the desired ripple is zero - thus as small as possible in a real circuit.

**Example 3**

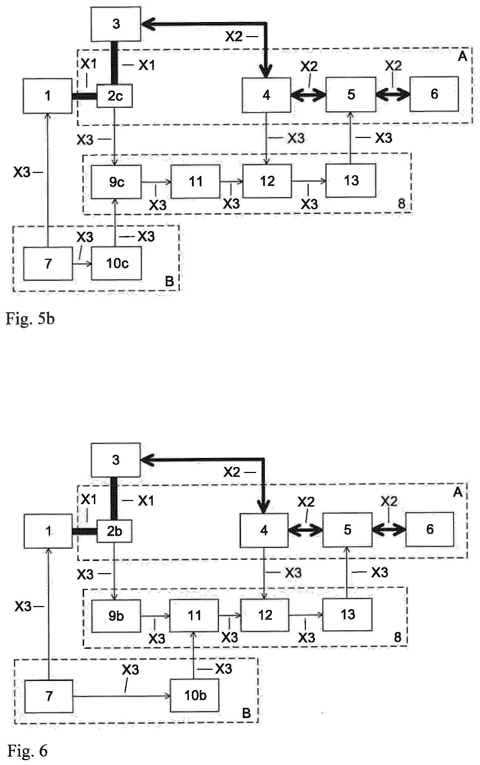

The devices on the Fig. 5b are schematic of the device, where the acceleration of the combustion engine 1 is measured.

This device differs from the device presented in the Example 1 by the fact that the desired values are the acceleration of the combustion engine 1, the desired values block is the desired acceleration block 10c, the sensor block is the acceleration sensor 2c, and the controller is the AAI controller 9c.

In this case, the desired acceleration block 10c is connected to the control circuit 8 by the signal wires X3 so that it is unidirectionally connected to the AAI controller 9c.

Based on the user's requirements, the master control system 7 controls the combustion engine 1 via the signal wires and also transmits the desired acceleration information to the desired acceleration block 10c via the signal wires.

Data about generated acceleration of the combustion engine 1 is transferred from the acceleration sensor 2c via signal wires to the AAI controller 9c, where it is compared with the desired acceleration value from the desired acceleration block 10c, and which is then converted to the desired torque in the torque calculation block 11, and then the resulting torque value is calculated to the current. The resulting current is fed to the current controller 12, where the current corresponding to the given torque and the actual currents measured in the measuring circuit 4 are used to form a voltage reference for the PWM modulator block 13. The control signals from the PWM modulator block 13 subsequently control the traction converter 5 and thus the power flow in the circuit.

## Example 4

The device on Fig. 6 shows a version for torque control using a torque sensor.

The desired values block 10 is connected to the control circuit 8 in such a way that it is unidirectionally connected to the torque calculation block 11 by the signal wires X3.

Based on the user's requirements, the master control system 7 controls the combustion engine 1 via the signal wires and also transmits the desired torque information to the desired torque block 10b via the signal wires.

Based on the user's requirements, the master control system 7 controls the combustion engine 1 via the signal wires and also transmits the desired torque information to the desired torque block 10b via the signal wires.

Data about generated torque of the combustion engine 1 is transferred from the torque sensor 2b via signal wires to the torque ripple extraction block 9b, where only the ripple (AC component) thereof is extracted, which is subsequently inverted, and which is then summed with the desired torque from the desired torque block 10b in the torque conversion block 11, and then the resulting torque value is converted to the current. The resulting current is fed to the current controller 12, where the current corresponding to the given torque and the actual currents measured in the measuring circuit 4 are used to form a voltage reference for the PWM modulator block 13. The control signals from the PWM modulator block 13 subsequently control the traction converter 5 and thus the power flow in the circuit,

## Example 5

Increase in engine/drive power.

In a preferred embodiment, the device compensates for the speed variation of the combustion engine 1 while also generating additional torque for driving the vehicle. In this case, the electric motor 3 in its function as a flywheel can also compensate for the movement of the whole vehicle, but this must be taken into account in the design, and parts of the device such as the electric motor 3, the traction converter 5 and the energy storage 6 must be sufficiently dimensioned for this purpose.

In this case, the circuitry increases the torque of the whole vehicle drive, thus the circuitry generates a torque used to drive the vehicle in addition to compensating for the torque ripple of the combustion engine 1.

We give an example of setting the parameters of a particular engine by comparing the compensation mode with the power boost mode.

Parameters for compensation mode only (i.e. no power increase):
Used for: Combustion engine - 200kW, 320Nm, 800-6000rpm, 4 stroke, torque ripple ±150Nm
parameters of our solution for 2000rpm

| | |
|---|---|
| Battery | 600V/80A, 100Ah |
| Inverter | 3x400V, 30kW and more |

Electric motor 3×400V, SMPM, 30kW and more, 150Nm and more
In this case the power required to compensate for the ripple is given by the relation:

$$P = torque\ ripple\ (Nm)\ x\ angular\ velocity\ (rad/s)$$

This power must be matched by the power of the inverter and the power that can be supplied by the power source, i.e. the battery. The battery capacity is not so critical, as the battery is periodically discharged, but also charged at the same time.
Parameters for power boost mode (200kW + 20kW)
Used for: Combustion engine - 200kW, 320Nm, 800-6000rpm, 4 stroke, torque ripple ±150Nm

| Additional power | 20kW |
|---|---|
| Battery | 600V/100A, 120Ah and more |
| Inverter | 3x400V, 50kW and more |

Electric motor 3×400V, SMPM, 50kW and more, 250Nm and more

$$Power = \text{power required to compensate for ripple} + \text{additional power}$$

In this case, the resulting power is given by the relation:

$$P = torque\ ripple\ (Nm)\ x\ angular\ velocity \left(\frac{rad}{s}\right) + additional\ power$$

This power must be matched by the power of the inverter and the power that can be supplied by the power source, i.e. the battery. In this case, the capacity of the battery is important, but it cannot be expressed in an exact way. The greater the capacity, the greater the trailing throttle of the vehicle, but this trailing throttle is also highly dependent on the way we drive, i.e. on how we "manage" the energy in the battery and on other parameters (such as self-discharge, aging, temperature).

**Industrial Applicability**

A device for controlling the electric motor in the function of a flywheel of the combustion engine and a method of its operation can be used in practice to replace a mechanical flywheel of the combustion engine, while the electric motor is controlled based on the measured performance of the combustion engine. This achieves a reduction in the weight of the combustion engine and its torque ripple, while at the same time increase its dynamics.

This design also allows to increase the power of the combustion engine by allowing the electric motor not only to act as a flywheel, but also to generate the additional power needed to reach the desired speed of the vehicle.

**Claims**

1.   A device for controlling an electric motor in the function of a flywheel of an internal combustion engine, **characterized by that** it comprises interconnected parts: a power part (A), a control circuit (8) and a control module (B), wherein:

the power part (A) consists of a sensor block (2), which is elastically connected by means of a shaft (X1) to the electric motor (3) in the function of the flywheel of the combustion engine (1) and is also connected to the external combustion engine (1) by means of the shaft (X 1), it further includes a measuring circuit (4) which is bi-directionally connected to the traction converter (5) by means of power wires (X2), which is bi-directionally connected to the energy storage (6) by means of power wires (X2), wherein the electric motor (3) is bi-directionally connected by means of the power wires (X2) to the measuring circuit (4) for the energy flow in the circuit, wherein the traction converter (5) is a traction inverter adapted for bi-directional energy flow; the energy storage (6) is composed of several components connected in parallel and comprises an electrochemical cell - a battery and a capacitor;
the control circuit (8) consists of a controller (9) which is connected to a torque calculation block (11) by signal wires (X3), and the torque calculation block is connected to a current controller (12) by signal wires (X3) connected to the PWM modulator block (13) by means of the signal wires (X3), wherein the PWM modulator block (13) is connected to the traction converter (5) by means of the signal wires (X3) in a unidirectional way , and the current regulator (12) is connected to the measuring circuit (4) in a unidirectional way by means of the signal wires (X3); and the control module (B) consists of a master control system (7) which is unidirectionally connected via signal wires (X3) to the desired values block (10), and the master control system (7) is also unidirectionally connected via signal wires (X3) to the external combustion engine (1);
whereby the sensor block (2) is unidirectionally connected to the controller (9) by means of signal wires (X3), and the desired values block (10) is connected to the control circuit (8) by means of signal wires (X3).

2. The device for controlling an electric motor according to claim 1 **characterized by that** the electric motor (3) is designed to damp vibrations of the combustion engine (1) and to periodically alternate operating modes, motor mode and generator mode at very short time intervals in milliseconds with a high frequency of tens to hundreds Hz, and is capable of tolerating high power and high overload capacity.

3. The device for controlling an electric motor according to claim 1 **characterized by that** the desired values block (10) is connected to the control circuit (8) in such a way. that it is connected to the controller (9) by means of signal wires (X3) in a unidirectional way.

4. The device for controlling an electric motor according to claim 3 **characterized by that** desired value is speed of the combustion engine (1); a desired values block is a desired speed block (10a); a sensor block is a speed sensor (2a) and a controller is a desired speed controller (9a).

5. The device for controlling an electric motor according to claim 3 **characterized by that** the desired values are the acceleration of the combustion motor (1); the desired values block is a desired acceleration block (10c), the sensor block is an acceleration senor (2c) and the controller is AAI controller (9c).

6. The device for controlling an electric motor according to claim 1 **characterized by that** desired values block (10) is connected to the control circuit (8) in such a way that it is unidirectionally connected to the torque calculation block (11) by means of signal wires (X3).

7. The device for controlling an electric motor according to claim 6 **characterized by that** the desired values are combustion engine torques (1), the desired values block is a desired torque block (10b), the sensor block is a torque sensor (2b), and the controller is a torque ripple extraction block (9b).

8. A method of operating a device according to claim 1 **characterized by that** it comprises the following steps:

   first, a user enters setpoints of the desired values of the power output of the combustion engine (1) to the master control system (7), and these are then sent to the desired values block (10);
   and the combustion engine (1) is resiliently connected with the sensor block (2) and with the electric motor (3), and the sensor block (2) collects the power values of the connected combustion engine (1), and ensures transmission of these values between the combustion engine (1) and the electric motor (3) in the flywheel function; whereby the sensor block (2) transmits information about the measured power values of the combustion engine (1) to the controller (9) via the signal wires (X3), where they are compared with the desired value from the desired values block (10) and the result is subsequently converted to current in the torque calculation block (11), which is fed to the current controller (12), where the current corresponding to the given torque and the actual currents measured in the measuring circuit (4) are used to form a voltage reference for the PWM modulator block (13);
   and subsequently, the power flow is controlled by control signals from the PWM modulator block (13) in connection through the traction converter (5), and the power flow is further directed to the energy storage (6) and from it to the electric motor (3) either in the motor mode or directed in the opposite direction in the recuperation mode, wherein in the motor mode the traction converter (5) produces the required AC voltage for the electric motor (3) from the DC voltage from the energy storage (6), and vice versa, in the generator mode, it directs the AC voltage generated by the electric motor (3) to the DC voltage for charging the energy storage (6);
   wherein the electric motor (3) operates periodically in the motor and generator mode at a high frequency from tens to hundreds of Hz, regardless of the operating mode of the vehicle with the combustion engine (1);
   and the master control system (7) controls the combustion engine (1) via the signal conductors (X3), and at the same time transmits the information of desired values to the desired values block (10) via the signal wires (X3), and on the basis of the desired values entered to the device via the master control system (7) and on the basis of evaluation of data in the desired speed block (10), the acceleration of the combustion engine (1) is compensated by the electric motor control device (3).

9. The method of operating a device according to claim 8 **characterized by that** the desired values are the speed of the combustion engine (1), the desired values block is a desired speed block (10a), the sensor block is a desired speed sensor (2a), and the controller is a desired speed controller (9a).

10. The method of operating a device according to claim 8 **characterized by that** the desired values are the acceleration of the combustion engine (1), the desired values block is a desired acceleration block (10c), the sensor block is an acceleration sensor (2c), and the controller is the AAI controller (9c).

11. The method of operating a device according to claim 8 **characterized by that** the desired values are combustion engine torques (1), the desired values block is a desired torque block (10b), the sensor block is a torque sensor (2b), and the controller is a torque ripple extraction block (9b).

12. The method of operating a device according to claim 8 **characterized by that** the energy storage (6) supplies constant power for slow events via the battery, and a capacitor, supercapacitor/ultracapacitor is used for supplying/storing the short but fast events, and thus for operation of the electric motor (3).

13. The method of operating a device according to claim 8 **characterized by that** that according to the operator's requirements entered into the device via the master control system (7) and based on the evaluation of the data in the desired values block (10), the acceleration of the combustion engine (1) is compensated by the electric motor control device (3) and, in addition, an additional torque is generated for driving the vehicle, while the parameters of the combustion engine (1) must be specifically set in advance already when designing it.

Fig. 1

Fig. 2a

Fig. 2b

Fig. 3

Fig. 4

Fig. 5a

Fig. 5b

Fig. 6

## EUROPEAN SEARCH REPORT

Application Number

EP 23 16 4180

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 195 32 129 A1 (CLOUTH GUMMIWERKE AG [DE]) 6 March 1997 (1997-03-06)<br>* figures 1,2,6 *<br>* abstract *<br>* column 1, lines 40-69 *<br>* column 2, lines 62-68 *<br>* column 3, lines 46-62 *<br>* column 5, lines 9-35 *<br>* column 12, lines 9-14 *<br>* column 13, lines 31-43 *<br>* column 13, line 68 - column 14, line 67 *<br>* column 15, lines 29-53 *<br>* column 16, lines 26-40 *<br>* column 19, line 61 - column 20, line 5 *<br>* column 34, lines 24-28 *<br>* column 34, line 50 - column 35, line 3 *<br>* column 35, lines 4-10 *<br>* column 35, lines 48-64 *<br>* column 35, line 65 - column 36, line 13 *<br>* column 36, lines 42-59 *<br>* column 36, line 60 - column 37, line 2 *<br>* column 37, lines 3-16 *<br>* column 37, lines 17-29 *<br>* column 37, lines 36-46 *<br>* column 37, line 47 - column 38, line 8 *<br>* column 41, lines 35-49 *<br>* the whole document *<br>----- | 1-13 | INV.<br>B60K6/46<br>B60K6/48<br>B60K6/52<br>B60W20/15<br>B60W30/20<br>B60W10/06<br>B60W10/08<br><br>ADD.<br>B60W50/00 |
| A | US 2010/004090 A1 (MIZUTANI RYOJI [JP] ET AL) 7 January 2010 (2010-01-07)<br>* figures 1-3 *<br>* the whole document *<br>----- | 1,8 | TECHNICAL FIELDS SEARCHED (IPC)<br><br>B60K<br>B60W |
| | -/-- | | |

The present search report has been drawn up for all claims

| Place of search | Date of completion of the search | Examiner |
|---|---|---|
| Munich | 7 September 2023 | Dubreuil, Cédric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 16 4180

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2015/166258 A1 (CUMMINS GENERATOR TECHNOLOGIES [GB]) 5 November 2015 (2015-11-05) * figures 1,14-16 * * the whole document * | 1,8 | |
| | ───── | | |

TECHNICAL FIELDS
SEARCHED        (IPC)

The present search report has been drawn up for all claims

| Place of search | Date of completion of the search | Examiner |
|---|---|---|
| Munich | 7 September 2023 | Dubreuil, Cédric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 4180

This annex lists the patent family members relating to the patent documents cited in the above-mentioned European search report.
The members are as contained in the European Patent Office EDP file on
The European Patent Office is in no way liable for these particulars which are merely given for the purpose of information.

07-09-2023

| Patent document cited in search report | | Publication date | Patent family member(s) | | Publication date |
|---|---|---|---|---|---|
| DE 19532129 | A1 | 06-03-1997 | DE | 19532129 A1 | 06-03-1997 |
| | | | EP | 0847489 A1 | 17-06-1998 |
| | | | JP | H11511225 A | 28-09-1999 |
| | | | KR | 19990044294 A | 25-06-1999 |
| | | | US | 6405701 B1 | 18-06-2002 |
| | | | WO | 9708438 A1 | 06-03-1997 |
| US 2010004090 | A1 | 07-01-2010 | BR | PI0619271 A2 | 20-09-2011 |
| | | | CN | 101321646 A | 10-12-2008 |
| | | | DE | 112006003236 T5 | 02-10-2008 |
| | | | JP | 4749428 B2 | 17-08-2011 |
| | | | JP | WO2007064025 A1 | 07-05-2009 |
| | | | KR | 20080075894 A | 19-08-2008 |
| | | | US | 2010004090 A1 | 07-01-2010 |
| | | | WO | 2007064025 A1 | 07-06-2007 |
| WO 2015166258 | A1 | 05-11-2015 | GB | 2540093 A | 04-01-2017 |
| | | | WO | 2015166258 A1 | 05-11-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015349679 A1

- EP 0746703 A